# EUROPÄISCHE PATENTSCHRIFT

(11) **EP 2 623 344 B1**
(45) Veröffentlichungstag und Bekanntmachung des Hinweises auf die Patenterteilung: **21.10.2015**
(21) Anmeldenummer: 13000075.5
(22) Anmeldetag: 09.01.2013
(51) Int. Cl.: B60D 1/06

(54) **Anhängekupplung mit einem Sensor**
Trailer coupling with a sensor
Attelage doté d'un capteur

(30) Priorität: 02.02.2012 DE 102012001921
(43) Veröffentlichungstag der Anmeldung: 07.08.2013
(73) Patentinhaber: WESTFALIA - Automotive GmbH, 33378 Rheda-Wiedenbrück (DE)
(72) Erfinder: Sielhorst, Bernhard, D-33378 Rheda-Wiedenbrück (DE)
(74) Vertreter: Patentanwälte Bregenzer und Reule Partnerschaftsgesellschaft mbB

(56) Entgegenhaltungen:
- EP-A2- 0 388 848
- DE-A1- 3 918 083
- US-B1- 7 926 832

## Beschreibung

Die Erfindung betrifft eine Anhängekupplung für ein Kraftfahrzeug, insbesondere ein Personen-Kraftfahrzeug, zum Anhängen eines Anhängers an das Kraftfahrzeug, mit einem an dem Kraftfahrzeug befestigbaren oder befestigten Kuppelkörperträger und einem an einem freien Endbereich des Kuppelkörperträgers angeordneten Kuppelkörper, auf den eine Zugkupplungsaufnahme einer Zugkupplung des Anhängers aufsetzbar ist, wobei der Kuppelkörper mindestens eine Widerlagerfläche für ein Schließteil der Zugkupplung aufweist, das zwischen einer zu der Widerlagerfläche hin bewegten, die Zugkupplung am Kuppelkörper verriegelnden und zu einem Fahrbetrieb des Gespanns bestehend aus Kraftfahrzeug und Anhänger vorgesehenen Schließstellung und einer von der Widerlagerfläche weg bewegten, zum Entfernen der Zugkupplung von dem Kuppelkörper vorgesehenen Offenstellung verstellbar ist, wobei die Anhängekupplung eine Sensoranordnung aufweist. Solch eine Anhängekupplung ist in Dokument US 7,926,832 B1 gezeigt.

Der Kuppelkörper ist beispielsweise eine Kupplungskugel und die Zugkupplung eine sogenannte Zugkugelkupplung. Die Zugkugelkupplung hat als Schließteil eine Schließbacke, die zur Kupplungskugel hin bewegbar ist, um die Zugkupplung zu schließen. Die Zugkugelkupplung wird auf die Kupplungskugel aufgesetzt und rastet sozusagen von selbst in die Schließstellung, so dass der Kuppelkörper bzw. die Kupplungskugel sicher in der Kupplungsaufnahme gehalten wird. Es kann allerdings vorkommen, dass der Bediener die Zugkugelkupplung nur auf die Kupplungskugel aufsetzt, jedoch nicht bemerkt, dass diese nicht sicher geschlossen bzw. verriegelt ist. Wenn dann noch ein elektrisches Anschlusskabel in eine Anhängersteckdose des Zugfahrzeugs eingesteckt wird, reißt das Kabel beim Anfahren ab, was eine aufwändige Reparatur und erhebliche Kosten nach sich zieht. Wenn der Anhänger unmittelbar gebraucht wird, beispielsweise vor Beginn einer Urlaubsfahrt, ist die Situation besonders unangenehm. Im ungünstigen Fall kann es sogar zu Unfällen oder Verletzungen kommen, wenn nämlich das Zugfahrzeug den Anhänger bereits eine bestimmte Strecke gezogen hat und der Anhänger erst dann, beispielsweise auf einer öffentlichen Straße, verloren geht

Es ist daher die Aufgabe der vorliegenden Erfindung, die Bediensicherheit einer Anhängekupplung zu verbessern.

Zur Lösung der Aufgabe ist bei einer Anhängekupplung der eingangs genannten Art vorgesehen, dass die Sensoranordnung mindestens einen Schließsensor zum Erkennen der Schließstellung des Schließteils der Zugkupplung aufweist.

Es ist ein Grundgedanke der vorliegenden Erfindung, dass eine Schließstellung oder eine Offenstellung oder beides von einem Schließsensor erfasst wird, um sicherzustellen, dass die Zugkupplung des Anhängers tatsächlich geschlossen ist. An dieser Stelle sei bemerkt, dass die Offenstellung aus Sicht des mindestens einen Schließsensor sozusagen eine negative Schließstellung ist. Beispielsweise ist die Sensoranordnung zum Senden eines Schließsignals in Abhängigkeit von der jeweiligen Stellung des Schließteils ausgestaltet. Es auch möglich, dass die Sensoranordnung in Abhängigkeit von der Schließstellung beispielsweise ein Drehwinkelsignal, das eine relative Drehstellung des Anhängers zum Kraftfahrzeug bzw. Kuppelkörperträger darstellt, in Abhängigkeit von der Schließstellung oder der Offenstellung des Schließteils erzeugen kann oder auch nicht erzeugt. Auch ein aktiver Steuereingriff in Richtung des Zugfahrzeugs bzw. Kraftfahrzeugs ist möglich, d.h. dass beispielsweise die Sensoranordnung ein Steuersignal in Richtung des Zugfahrzeugs bzw. Kraftfahrzeugs sendet, das dazu vorgesehen ist, beispielsweise eine Motorsteuerung dazu anzuweisen, das Kraftfahrzeug nicht in Bewegung zu setzen, und/oder eine Bremseinrichtung des Kraftfahrzeugs dazu anzusteuern, eine Bremse des Kraftfahrzeugs in Richtung der Brems Stellung zu betätigen oder eine Parkbremse oder sonstige Feststell-Bremse nicht zu lösen, solange die Zugkupplung am Kuppelkörper nicht sicher verriegelt bzw. geschlossen ist.

Unter einem Kraftfahrzeug im Sinne der Erfindung ist nicht nur ein Kraftfahrzeug mit einem Verbrennungsmotor, sondern auch ein Kraftfahrzeug mit einem Elektroantrieb oder einem so genannten Hybrid-Antrieb (Verbrennungsmotor und Elektromotor) zu verstehen.

Der mindestens eine Schließsensor ist zweckmäßigerweise an dem Kuppelkörper direkt angeordnet, beispielsweise an einer Kupplungskugel.

Die Widerlagerfläche ist vorteilhaft an einem freien, im am Kraftfahrzeug montierten Zustand vom Kraftfahrzeug abgewandten Bereich des Kuppelkörpers angeordnet.

Die Sensoranordnung und/oder eine mit der Sensoranordnung zusammenwirkende, mindestens ein Signal eines Sensors der Sensoranordnung auswertende Auswerteeinrichtung sind zweckmäßigerweise zum Senden eines Schließsignals, z.B. eines Melde- und/oder Steuersignals, in Abhängigkeit von der jeweiligen Stellung des Schließteils ausgestaltet.

Der mindestens eine Schließsensor umfasst zweckmäßigerweise mindestens zwei, vorzugsweise drei, in einem Abstand am Kuppelkörper angeordneten Schließsensoren. Mehrere Sensoren eignen sich beispielsweise zu redundanten Messungen, so dass anhand mehrerer Messungen sichergestellt werden kann, dass das Schließteil der Zugkupplung tatsächlich geschlossen ist. Weiterhin können mehrere Schließsensoren auf unterschiedlichen Messprinzipien beruhen, das heißt dass beispielsweise ein Schließsensor eine kapazitive Messung durchführt, während ein anderer Sensor ein induktiver Sensor ist und eine induktive Messung durchführt.

Bevorzugt sind mehrere in einem Abstand zueinander angeordnete Schließsensoren, beispielsweise über einen Außenumfang des Kuppelkörpers am Kuppelkörper Kuppelkörperträger zueinander beabstandete Schließsensoren. Aber auch vertikal zueinander beabstandete Schließsensoren sind vorteilhaft. Wenn mehrere der Schließsensoren jeweils erfassen, dass sich das Schließteil, beispielsweise eine Schließbacke, in der Schließstellung befindet, ist eine Redundanz gegeben. So kann es beispielsweise sein, dass die Schließbacke bzw. das Schließteil nur einem Schließsensor gegenüberliegt, beispielsweise weil der Anhänger schräg zum Zugfahrzeug steht. Wenn jedoch zwei oder mehr Schließsensoren erfassen, dass das Schließteil an der Widerlagerfläche anliegt bzw. einen vordefinierten Abstand zu der Widerlagerfläche hat, ist die Zugkupplung ordnungsgemäß geschlossen bzw. verriegelt.

Der mindestens eine Schließsensor umfasst zweckmäßigerweise einen berührungslosen Sensor, zum Beispiel einen optischen Sensor, einen induktiven Sensor, ein kapazitiven Sensor oder dergleichen. Mehrere Sensoren, die auf unterschiedlichen Messprinzipien beruhen, sind z.B. vorteilhaft, um die Messzuverlässigkeit und/oder die Messgenauigkeit zu verbessern. Es versteht sich, dass auch ein Tastsensor, ein elektrischer Schalter oder sonstiger auf einem Berührungsprinzip basierender Schließsensor möglich ist.

Die Sensoranordnung ist zweckmäßigerweise zur redundanten Auswertung der Sensorsignale von mindestens zwei Sensoren, also mehrerer Sensorsignale, ausgestaltet. Dazu hat die Anhängekupplung beispielsweise eine separate Auswerteeinrichtung, insbesondere als Bestandteil eines Steuergeräts. Die beiden Sensoren können beispielsweise zwei Schließsensoren sein. Es ist aber auch möglich, dass einer der Sensoren ein Schließsensor ist, während der andere Sensor ein Sensor ist, der zur Erfassung einer neben dem Schließteil liegenden Fläche der Zugkupplungsaufnahme der Zugkupplung vorgesehenen Sensor ist. Beispielsweise kann dieser weitere Sensor der mindestens einen Schließsensor gegenüberliegend bzw. die beiden Sensoren können an einander entgegengesetzten Seiten des Kuppelkörpers angeordnet sein. Nur wenn beide Sensoren melden, dass beispielsweise das Schließteil an der Widerlagerfläche anliegt bzw. den vordefinierten Abstand zu der Widerlagerfläche hat bzw. der andere Sensor, der kein Schließsensor ist, die Anlage der Fläche der Zugkupplungsaufnahme am Kuppelkörper meldet bzw. einen vordefinierten Abstand der Fläche der Zugkupplungsaufnahme bezüglich des Kuppelkörpers, meldet die Sensoranordnung, zum Beispiel deren Auswerteeinrichtung, eine korrekte Verriegelung der Zugkupplung am Kuppelkörper.

Wie bereits angedeutet, umfasst die Sensoranordnung zweckmäßigerweise mindestens einen Kupplungsaufnahme-Sensor, der zur Erfassung einer Fläche der Zugkupplungsaufnahme der Zugkupplung ausgestaltet ist, die nicht vom Schließteil gebildet ist, sondern von einer Fläche neben dem Schließteil, beispielsweise von einer Fläche einer so genannten Kugelpfanne. Bevorzugt sind der Kupplungsaufnahme-Sensor und der mindestens eine Schließsensor einen einander entgegengesetzten Flächenbereichen der Anhängekupplung, beispielsweise des Kuppelkörpers oder des Kuppelkörperträgers, angeordnet.

Der mindestens eine Kupplungsaufnahme-Sensor ist beispielsweise neben der für das Schließteil vorgesehenen Widerlagerfläche angeordnet. "Neben" kann dabei heißen, dass diese Fläche direkt neben der Widerlagerfläche ist, so dass die beiden Flächen aneinander angrenzen. Es ist aber auch möglich, dass diese weitere Fläche und die Widerlagerfläche an entgegengesetzten Seiten des Kuppelkörpers angeordnet sind.

Die Sensoranordnung umfasst zweckmäßigerweise mindestens einen weiteren Sensor zur Messung einer physikalischen Eigenschaft, beispielsweise einen Kraftsensor zur Erfassung einer auf die Anhängekupplung wirkenden Kraft, zum Beispiel einer Stützlast, Zuglast oder dergleichen, und/oder zweckmäßigerweise mindestens einen Drehwinkelsensor zur Erfassung einer Drehwinkelstellung der Zugkupplung relativ zu dem Kuppelkörperträger. Somit kann die Anhängekupplung einen Drehwinkel, beispielsweise einen Drehwinkel um eine Hochachse, des Anhängers relativ zum Zugfahrzeug erfassen.

Der mindestens eine Drehwinkelsensor ist vorzugsweise zur Erfassung einer relativen Verdrehung des Kuppelkörpers zum Kuppelkörperträger und/oder zur Erfassung einer relativen Verdrehung der Zugkupplung zum Kuppelkörper ausgestaltet.

Zum Beispiel ist der Kuppelkörper am Kuppelkörperträger drehbar gelagert. Dann ist der mindestens eine Drehwinkelsensor vorzugsweise zur Erfassung einer relativen Verdrehung des Kuppelkörpers zum Kuppelkörperträger ausgestaltet.

Es ist auch möglich, dass der mindestens eine Drehwinkelsensor zur Erfassung einer relativen Verdrehung der Zugkupplung zum Kuppelkörper ausgestaltet ist. Dabei sind berührungslose Messprinzipien, beispielsweise optischen Messprinzipien ohne weiteres möglich.

Wenn die Sensoranordnung nicht nur mindestens einen Schließsensor, sondern auch einen Drehwinkelsensor und/oder einen Kraftsensor umfasst, ist es beispielsweise möglich, dass die Auswerteeinrichtung die Sensorsignale mehrerer Sensoren auswertet, so dass sie mehrfach nützlich ist.

Der mindestens eine Drehwinkelsensor kann den Schließsensor bilden oder mit diesem zusammenwirken. Es ist zum Beispiel möglich, dass der Drehwinkelsensor einen oder mehrere induktive Sensoren umfasst. Wenn das Schließteil auf einen Sensorgeber für den induktiven Sensor wirkt, zum Beispiel einen Magneten näher zum induktiven Sensor hin verstellt, kann der Drehwinkelsensor zugleich eine korrekte Verriegelung bzw. die Schließstellung der Zugkupplung erfassen. Eine Zusammenwirkung zwischen Drehwinkelsensor und Schließsensor kann man sich so vorstellen, dass beispielsweise ein Signal des Drehwinkelsensors nur dann von der Anhängekupplung, zum Beispiel deren Auswerteeinrichtung, an ein Bordnetz des Zugfahrzeugs oder Kraftfahrzeugs gemeldet wird, wenn der Schließsensor eine korrekte Verriegelung der Zugkupplung an der fahrzeugseitigen Anhängekupplung meldet.

An dem Kuppelkörper ist zweckmäßigerweise ein Mitnehmer, zum Beispiel ein ringförmiger Mitnehmer, eine Art Stempel-Mitnehmer oder dergleichen, beweglich gelagert, der von der Zugkupplungsaufnahme mitnehmbar und relativ zu dem Kuppelkörper verstellbar ist, wobei der Mitnehmer einen Bestandteil der Sensoranordnung bildet. Der Mitnehmer eignet sich beispielsweise dazu, eine Drehwinkelstellung der Zugkupplung relativ zum Kuppelkörperträger zu ermitteln. Der Mitnehmer kann beispielsweise drehbar, verschieblich oder beides am Kuppelkörper beweglich gelagert sein.

In diesem Zusammenhang ist es vorteilhaft, dass der mindestens eine Schließsensor eine korrekte Verriegelung bzw. eine Schließstellung der Zugkupplung erfasst. Der Mitnehmer kann beispielsweise vor eine Oberfläche des Kuppelkörpers vorstehen, was an sich eine korrekte Verriegelung der Zugkupplung an der erfindungsgemäßen Anhängekupplung behindert. Wenn jedoch der Schließsensor erfasst, dass dennoch eine korrekte Verriegelung der Zugkupplung an der erfindungsgemäßen Anhängekupplung gegeben ist, steht einem ordnungsgemäßen Fahrbetrieb des Gespanns bestehend aus Zugfahrzeug und Anhänger nichts mehr im Wege.

Der Mitnehmer ist beispielsweise durch das Schließteil komprimierbar. Wie schon erwähnt, ist es vorteilhaft, wenn der Mitnehmer vor eine Oberfläche des Kuppelkörpers vorsteht. es ist allerdings auch im Rahmen der Erfindung, dass beispielsweise ein Mitnehmervorsprung der Zugkupplung zu dem Mitnehmer am Kuppelkörper vorsteht und diesen somit betätigen kann. Somit muss der Mitnehmer des Kuppelkörpers also nicht vor die Oberfläche des Kuppelkörpers vorstehen. Der Mitnehmer steht zumindest dann vor die Oberfläche des Kuppelkörpers vor, wenn er noch nicht durch die Zugkupplung unkomprimiert ist.

Der Mitnehmer umfasst zweckmäßigerweise mindestens ein durch das Schließteil betätigbares Sensorteil, zum Beispiel einen Sensorgeber (zum Beispiel einen Magneten) und/oder einen Sensor (zum Beispiel einen induktiven Sensor). Wenn also beispielsweise das Schließteil das Sensorteil in Richtung eines weiteren Sensorteils, also einen Sensorgeber zu einem Sensor oder einen Sensor zu einem Sensorgeber, im Innern des Kuppelkörpers hin bewegt, so dass sich beispielsweise ein Magnetfeld ändert, ist durch den eines Sensorteile bildenden Sensor die Schließstellung des Schließteils ermittelbar.

Eine Variante der Erfindung, die in der Zeichnung nicht näher dargestellt ist, sieht vor, dass der Kuppelkörper zu einem drehfesten Halt der Zugkupplung ausgestaltet ist, beispielsweise eine polygonale Außenoberfläche aufweist. Der Kuppelkörper ist bei dieser Ausgestaltung relativ zum Kuppelkörper drehbar gelagert. Somit kann also die Anhängekupplung relativ zum Kuppelkörper nicht drehen, während der Kuppelkörper relativ zum Kuppelkörperträger drehbar ist. Eine Drehwinkelsensoranordnung erfasst beispielsweise eine Relativbewegung des Kuppelkörpers zum Kuppelkörperträger.

Eine weitere Variante der Erfindung sieht vor, dass der Kuppelkörper außenseitig zumindest abschnittsweise kugelförmig ist und für die Zugkupplungsaufnahme einen diese drehbar lagernden Lagerkörper, zum Beispiel zum ein- oder mehrachsigen drehgelenkigen Schwenken relativ zu dem Kuppelkörperträger, bildet. Somit kann die Anhängekupplung die Zugkupplung drehbar lagernden, so dass der Anhänger relativ zum Zugfahrzeug beweglich ist.

Es versteht sich, dass auch der drehbar am Kuppelkörper gelagerte Kuppelkörper zumindest abschnittsweise kugelförmig sein kann, um zumindest um eine Schwenkachse eine drehgelenkige Schwenkbarkeit des Anhängers relativ zum Zugfahrzeug zu ermöglichen.

Der Kuppelkörper kann einteilig sein oder auch mehrteilig. Die mehrteilige Bauform sieht beispielsweise ein Unterteil und ein Oberteil des Kuppelkörpers vor, was die Montage der Sensoranordnung erleichtert.

Die Sensoranordnung ist zweckmäßigerweise zur Erzeugung eines die Schließstellung des Schließteils repräsentierenden Meldesignals oder eines Steuersignals (oder beiden) in Abhängigkeit von einem Anhänger-Präsenzsignal ausgestaltet. Das Anhänger-Präsenzsignal wird von einer Erfassungseinrichtung gebildet, in Abhängigkeit von einer Verbindung einer elektrischen Anhänger-Kontaktanordnung, zum Beispiel eines Steckers, des Anhängers mit einer Stromversorgungseinrichtung, beispielsweise einer Anhängersteckdose, die zur elektrischen Stromversorgung des Anhängers vorgesehen ist. Die Erfassungseinrichtung bildet zweckmäßigerweise einen Bestandteil der Anhängekupplung. Auch die Stromversorgungseinrichtung, zum Beispiel die Anhängersteckdose, bildet zweckmäßigerweise einen Bestandteil der erfindungsgemäßen Anhängekupplung.

Wenn also beispielsweise ein Stecker des Anhängers in die Steckdose gesteckt wird, wird zum Beispiel ein Kontaktschalter betätigt, der einen Stromkreis schließt, so dass die Erfassungseinrichtung dadurch erkennen kann, dass der Anhänger elektrisch mit dem Zugfahrzeug verbunden ist. Aber auch elektrische Prüfschaltungen, die beispielsweise einen Stromfluss über eine Anhängerbeleuchtung des Anhängers messen oder dergleichen, können Bestandteile der Erfassungseinrichtung sein. Solche Prinzipien sind bekannt.

Die Sensoranordnung der Anhängekupplung, die den mindestens einen Schließsensor umfasst, meldet beispielsweise nur dann die Schließstellung und/oder die Offenstellung der Zugkupplung, wenn auch der Stecker des Anhängers mit der Stromversorgungseinrichtung des Zugfahrzeugs verbunden ist. Es in dieser Situation besonders vorteilhaft, wenn die nachfolgenden Maßnahme getroffen ist:
Die Anhängekupplung weist zweckmäßigerweise eine Schnittstelle zu einem Bordnetz des Kraftfahrzeugs auf. Die Schnittstelle umfasst beispielsweise elektrische und/oder optische Signalleitungen und/oder Steuerleitungen, eine Bus-Schnittstelle, zum Beispiel eine CAN-Bus-Schnittstelle, oder dergleichen. Die Anhängekupplung, beispielsweise deren Auswerteeinrichtung, sind zweckmäßigerweise dazu ausgestaltet, ein Meldesignal und/oder ein Steuersignal an das Bordnetz zusenden. Bei dem Meldesignal handelt es sich beispielsweise ein Warnsignal, dass die Zugkupplung nicht geschlossen ist. Das Steuersignal kann ein Signal zur Blockierung einer Bremse des Zugfahrzeugs in Abhängigkeit von der Schließstellung des Schließteils der Zugkupplung umfassen. Somit kann das Steuersignal beispielsweise eine Bremseinrichtung des Zugfahrzeugs dazu instruieren, eine Parkbremse nicht zu lösen und/oder aktiv eine Parkbremse des Zugfahrzeugs zu betätigen, damit das Gespann bestehend aus Zugfahrzeug und Anhänger nicht fährt, wenn die Zugkupplung des Anhängers nicht geschlossen ist.

An dieser Stelle sei bemerkt, dass der Kuppelkörperträger abnehmbar, insbesondere steckbar, oder fest am Kraftfahrzeug montiert sein kann oder auch an einem Lager, z.B. einem Schwenk- und/oder Schiebelager, angeordnet dergestalt, dass der Kuppelkörperträger zwischen einer Gebrauchsstellung und einer Nichtgebrauchsstellung verstellbar gelagert ist. In der Nichtgebrauchsstellung ist der Kuppelkörperträger bzw. auch der Kuppelkörper beispielsweise unter einer Heckschürze oder einem Heck-Stoßfänger des Kraftfahrzeuges verborgen, jedenfalls gegenüber Sicht im Wesentlichen abgedeckt, so dass eine optisch ansprechende Gestaltung getroffen ist. In der Betriebsstellung hingegen steht der Kuppelkörper nach hinten vor das Kraftfahrzeug vor, beispielsweise nach hinten vor einen Stoßfänger, so dass der Anhänger angehängt werden kann.

Nachfolgend werden Ausführungsbeispiele der Erfindung anhand der Zeichnung erläutert. Es zeigen:
- Figur 1: eine Querschnittsansicht einer Anhängekupplung gemäß der Erfindung, an die eine Zugkupplung angekuppelt ist,
- Figur 2: eine perspektivische Schrägansicht der Anhängekupplung von hinten oben,
- Figur 3: eine Querschnittsansicht der Anhängekupplung gemäß Figur 2, etwa entlang einer Schnittlinie A-A in Figur 5,
- Figur 4: eine perspektivische Schrägansicht einer Variante der Anhängekupplung gemäß Figuren 1-3,
- Figur 5: eine Vorderansicht der Anhängekupplung gemäß Figur 4,
- Figur 6a: einen ersten Mitnehmer der Anhängekupplung gemäß Figuren 1-3 oder 4-5,
- Figur 6b: einen zweiten Mitnehmer der Anhängekupplung gemäß Figuren 1-3 oder 4-5,
- Figur 7: eine Querschnittsansicht einer 2. Anhängekupplung gemäß der Erfindung etwa entlang einer Schnittlinie B-B in Figur 8,
- Figur 8: eine perspektivische Schrägansicht der Anhängekupplung gemäß Figur 7,
- Figur 9: eine Querschnittsansicht einer 3. erfindungsgemäßen Anhängekupplung, etwa entlang einer Schnittlinie C-C in Figur 10, und
- Figur 10: eine perspektivische Schrägansicht der Anhängekupplung gemäß Figur 9.

Eine Anhängekupplung 10 ist an einem Kraftfahrzeug 12 befestigt, beispielsweise einem Querträger. An einem Kuppelkörperträger 13 der Anhängekupplung 10 sind hierfür beispielsweise Bohrungen 14 vorgesehen, wobei eine bewegliche Lagerung, insbesondere eine Dreh- und/oder Schiebelagerung, des Kuppelkörperträgers 13 bezüglich des Kraftfahrzeugs 12 auch möglich ist, z.B. anhand einer geeigneten Lagereinrichtung. Der Kuppelkörperträger 13 steht nach hinten vor einen Stoßfänger 11 des Kraftfahrzeuges 12 vor. Der Kuppelkörperträger 13 trägt an seinem freien Ende einen Kuppelkörper 15, der vorliegend eine kugelige Gestalt hat. Dementsprechend kann eine Zugkupplung 16 eines Anhängers 17 mit ihrer Zugkupplungsaufnahme 18 auf den kugeligen Kuppelkörper 15 aufgesetzt werden.

Die Zugkupplung 16 ist an einem freien Ende einer Deichsel 19 des Anhängers 17 angeordnet und mittels eines Schwenkhebels 20 betätigbar. Wenn der an um eine Schwenkachse 24 schwenkbar gelagerte Schwenkhebel 20 in die Schließstellung, das heißt in Richtung der Deichsel 19 bewegt wird, betätigt er in an sich bekannter Weise ein Schließteil 21, z.B. einen Haltebacken, in Richtung einer Kugeloberfläche 23 des Kuppelkörpers 15. Dann liegt das Schließteil 21 beispielsweise an einer vom Kraftfahrzeug 12 abgewandten Seite am Kuppelkörper 15 an, wo dieser eine Widerlagerfläche 28 aufweist. Die Widerlagerfläche 28 umfasst beispielsweise einen Winkelbereich der Kugeloberfläche 23 von etwa 180°. Der übrige Bereich der Kugeloberfläche 23 wird nachfolgend als Kupplungsaufnahme-Fläche 29 bezeichnet. An der Kupplungsaufnahme-Fläche 29 liegt die Zugkupplungsaufnahme 18 an.

Es versteht sich, dass die Kupplungsaufnahme-Fläche 29 auch einen Teil der Widerlagerfläche 28 bilden kann und umgekehrt, da die betreffenden Definitionen auch von der Winkelstellung des Anhängers 17 zum Zugfahrzeug bzw. Kraftfahrzeug 12 abhängen. Als Widerlagerfläche 28 soll derjenige Bereich des Kuppelkörpers 15 verstanden werden, an dem das Schließteil 21 anliegt, wenn die Längsmittelachsen des Kraftfahrzeugs 12 und des Anhängers 17 etwa auf einer Linie liegen.

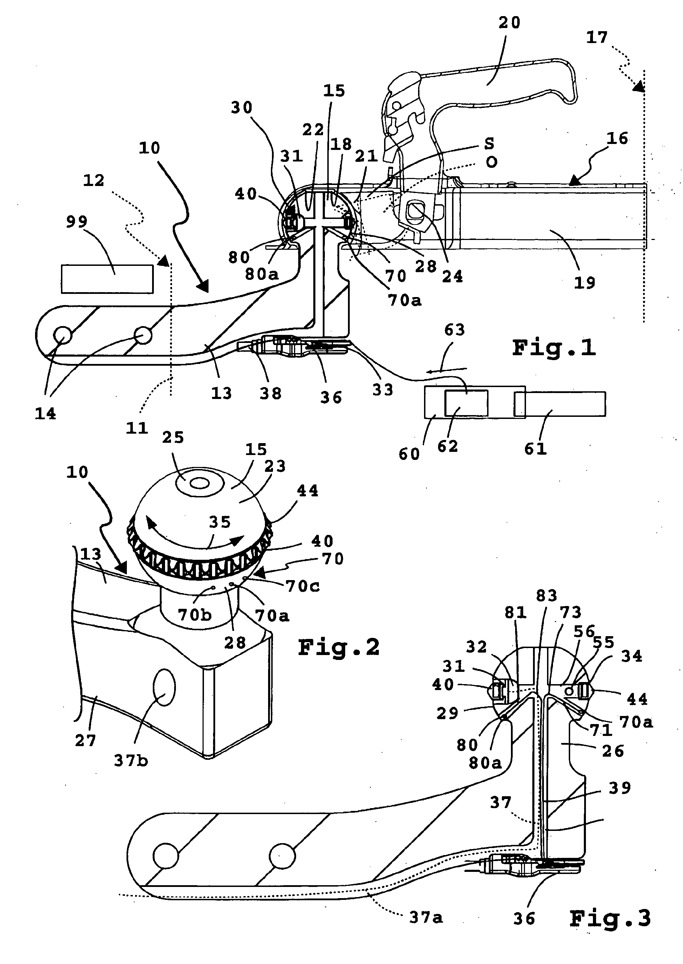

Wenn die Zugkupplung 16 geschlossen ist, also ordnungsgemäß am Kuppelkörper 15 verriegelt ist und zudem auch das Schließteil 21 geschlossen ist (siehe Figur 1), liegt eine Innenfläche 22 der Zugkupplungsaufnahme 18 an der Kugeloberfläche 23 an.

Der Kuppelkörper 15 ist zweckmäßigerweise feststehend bezüglich des Kuppelkörperträgers 13, zumindest drehfest, so dass die Zugkupplungsaufnahme 18 an der Kugeloberfläche 23 in bekannter Weise außenseitig entlang gleitet.

Die vorliegende Ausgestaltung des Kuppelkörpers 15 als Kupplungskugel, die bevorzugt ist, ermöglicht die Ankupplung einer üblichen, normgerechten Zugkugelkupplung an die erfindungsgemäße Anhängekupplung 10, vorliegend also der Zugkupplung 16. Diese ist dementsprechend eine Zugkugelkupplung.

Der Kuppelkörper 15 hat an seiner Oberseite eine Abflachung 25. Der Kuppelkörperträger 13 weist einen Halsabschnitt 26 auf, auf dem der Kuppelkörper 15 angeordnet ist. Der Halsabschnitt 26 befindet sich an einem freien Endbereich eines Armabschnitts 27 des Kuppelkörperträgers 13.

Der Armabschnitt 27, der Halsabschnitt 26 und der Kuppelkörper 15 sind zweckmäßigerweise einstückig, so dass insgesamt die Anhängekupplung 10 eine hohe Belastbarkeit aufweist. Es besteht aber die Möglichkeit, den Kuppelkörper 15 und den Kuppelkörperträger 13 auch mehrteilig auszuführen, beispielsweise als zwei voneinander an sich zunächst separate, jedoch fest miteinander verbundene Komponenten. Die jeweiligen Bestandteile der Anhängekupplung 10 können beispielsweise miteinander verschweißt, verklebt oder verschraubt sein.

Die Sensoranordnung 30 umfasst einen Drehwinkelsensor 31, beispielsweise einen magnetischen Sensor, der in einer Sensoraufnahme 32 direkt am Kuppelkörper 15 angeordnet ist. Die Sensoraufnahme 32 und somit der Drehwinkelsensor 31 befinden sich in einem äquatorialen Bereich des Kuppelkörpers 15. Der Drehwinkelsensor 31 ist beispielsweise an einer Platine angeordnet, die weitere Komponenten enthalten kann, beispielsweise einen Filter zur Ausfilterung von unplausiblen Spitzenwerten, einen Verstärker zu Verstärkung eines Sensorsignals, das der Drehwinkelsensor 31 erzeugt, oder dergleichen. Selbstverständlich können diese Funktionen auch unmittelbar in den Drehwinkelsensor 31 integriert sein, insbesondere dann, wenn dieser als ein ASIC, ausgebildet ist.

Am Kuppelkörper 15, ebenfalls im Bereich der Äquatoriallinie, befindet sich weiterhin ein Mitnehmer 40, der in einer Lageraufnahme 34 des Kuppelkörpers 15 drehbar gelagert ist. Der Mitnehmer 40 ist ringförmig, d.h. er ist als ein Ring ausgestaltet. In dem Mitnehmer 40 sind Magnete 41 aufgenommen, deren Magnetfeld den Drehwinkelsensor 31 erregt bzw. beaufschlagt. Ändert sich nunmehr die Winkelposition der Magnete 41 relativ zum Drehwinkelsensor 31, erzeugt dieser ein Winkelsignal, das die Winkelstellung des Mitnehmers 40 relativ zum Drehwinkelsensor 31 repräsentiert. Da der Drehwinkelsensor 31 bezüglich des Kuppelkörpers 15 ortsfest ist, signalisiert und identifiziert das Winkelsignal, das der Drehwinkelsensor 31 erzeugt, zugleich eine Winkelstellung des Mitnehmers 40 relativ zum Kuppelkörper 15.

Die Magnete 41 sind beispielsweise nebeneinander, jedoch zweckmäßigerweise mit einem Abstand 43 zueinander im Mitnehmer 40 aufgenommen. Die Magnete 41 sind beispielsweise in Umfangsrichtung des Mitnehmers 40 nebeneinander angeordnet.

Durch einen Pfeil 35 wird die Drehbarkeit des Mitnehmers 40 relativ zum Kuppelkörper 15 in Figur 2 angedeutet.

Der Mitnehmer 40 besteht beispielsweise aus Kunststoffmaterial, das eine gewisse Kompressibilität oder Elastizität aufweist, insbesondere aus Polyurethan. Vernetztes Polyurethan ist vorteilhaft. Zudem schützt der flexible Mitnehmer 40 die in ihm aufgenommenen Magnete 41. Beispielsweise sind Aufnahmetaschen 42 für die Magnete 41 vorhanden. Es ist aber auch möglich, dass die Magnete 41 direkt bei der Herstellung des Mitnehmers 40 mit dem Kunststoffmaterial umspritzt sind.

Der Mitnehmer 40 wird von der Zugkupplung 16 mitgenommen, wenn diese an der Anhängekupplung 10 montiert ist, d.h. der Kuppelkörper 15 im Innenraum der Zugkupplungsaufnahme 18 angeordnet ist. Der Mitnahmeeffekt wird noch verbessert, indem das Schließteil 21 Druck auf den Mitnehmer 40 ausübt, so dass dieser formschlüssig in der Zugkupplungsaufnahme 18 anliegt, jedoch bezüglich des Kuppelkörpers 15 drehbar ist (Pfeil 35) . Wenn also nunmehr der Anhänger 17 seine Drehposition oder Drehwinkelstellung relativ zum Kraftfahrzeug 12 bzw. zur Anhängekupplung 10 verändert, nimmt er den Mitnehmer 40 mit. Dadurch ändert eine Relativposition eines Magnetfeldes, das die Magnete 41 erzeugen, relativ zum Drehwinkelsensor 31. Der Drehwinkelsensor 31 kann somit die Winkelstellung des Mitnehmers 40 relativ zum Kuppelkörper 15, entsprechend also auch die Winkelstellung des Anhängers 17 relativ zum Kraftfahrzeug 12, ermitteln.

An der Unterseite des Kuppelkörperträgers 13 ist eine Auswerteeinrichtung 36 vorgesehen, die beispielsweise über eine Leitung 37 mit der Sensoranordnung 30, insbesondere dem Drehwinkelsensor 31, verbunden ist. Die Auswerteeinrichtung 36 weist beispielsweise eine Bordnetz-Schnittstelle 38 zur Verbindung mit einem Bordnetz 99 des Zugfahrzeugs bzw. Kraftfahrzeugs 12 auf. Die Leitung 37 ist beispielsweise in einem Kanal 39, der den Armabschnitt 27 durchsetzt, zur Unterseite des Kuppelkörperträgers 13 geführt und mit der Auswerteeinrichtung 36 verbunden.

Es ist auch möglich, dass die Sensoranordnung 30 über eine Leitung 37a direkt mit dem Bordnetz 99 des Zugfahrzeugs bzw. Kraftfahrzeugs 12 verbunden ist und/oder dass eine lokale Ausgabeeinrichtung 37b, z.B. eine Anzeige, z.B. mit LEDs, einer LCD-Anzeige oder dergleichen, und/oder ein Lautsprecher, zur Ausgabe von Meldungen der Sensoranordnung 30 vorgesehen ist.

Die Auswerteeinrichtung 36 umfasst beispielsweise ein Schutzgehäuse 33 und/oder wird durch einen Deckel 98 geschützt.

Anstelle des magnetischen Drehwinkelsensors 31 könnte selbstverständlich auch ein optischer Sensor vorgesehen sein, der beispielsweise eine optische Kodierung am Innenumfang des Mitnehmers 40 liest und somit einen Drehwinkel erkennt oder auch ein optischer Sensor, der direkt eine Bewegung der Zugkupplung relativ zum Kuppelkörper 15 erfasst, beispielsweise mit optischen Messprinzipien eine Bewegung der Zugkupplungsaufnahme und/oder des Schließteils 21 erfasst.

Der Mitnehmer 40 hat Mitnahmevorsprünge 44, die vor einen Außenumfang des Kuppelkörpers 15, das heißt vor die Kugeloberfläche 23, vorstehen. Die Mitnahmevorsprünge 44 sind zweckmäßigerweise kompressibel.

Man kann sich vorstellen, dass der Mitnehmer 40 einer ordnungsgemäßen Montage bzw. Befestigung der Zugkupplung 16 am Kuppelkörper 15 im Wege stehen kann, da die Zugkupplungsaufnahme 18 an den Mitnahmevorsprüngen 44 vorbei gleiten muss, bevor das Schließteil 21 von der in gestrichelten Linien dargestellten Offenstellung O in die Schließstellung S bewegt werden kann. Hier schaffen die folgenden Maßnahmen Abhilfe:
Die Anhängekupplung 10 umfasst beispielsweise 3 an der Widerlagerfläche 28 angeordnete Schließsensoren 70, die messen, ob das Schließteil 21 in der in Figur 1 dargestellten Schließstellung ist. Die Schließsensoren 70 sind vorzugsweise Berührungslosesensoren, wobei beispielsweise auch Tastsensoren oder andere auf Kontakt des Schließteils 21 reagierende Sensoren möglich sind.

Die Schließsensoren 70 umfassen beispielsweise optische Sensoren, kapazitive Sensoren oder induktive Sensoren. Wenn das Schließteil 21 in den Erfassungsbereich eines Schließsensors 70 gelangt und von der Offenstellung O in die Schließstellung S bewegt wird oder umgekehrt, ändert sich beispielsweise ein elektrisches Feld im Bereich des jeweiligen Schließsensors 70, so dass dieser ein entsprechendes Meldesignal an die Auswerteeinrichtung 36 sendet.

Die Schließsensoren 70 sind beispielsweise in Kanälen 71 angeordnet, die vom Kanal 39 abzweigen und sich zur Kugeloberfläche 23, d.h. zur Außenseite des Kuppelkörpers 15, erstrecken. Es ist möglich, dass die Schließsensoren 70 in den Kanälen 71 zusätzlich geschützt sind, beispielsweise durch eine Vergussmasse, durch in der Zeichnung nicht dargestellte Deckel an den aus Mündungen der Kanäle 71 an der Kugeloberfläche 23 oder dergleichen.

Die Kanäle 71 kommunizieren mit dem Kanal 39, so dass beispielsweise elektrische Leitungen 73 von den Schließsensoren 70 zu der Auswerteeinrichtung 36 in den Kanälen 71 und dem Kanal 39 angeordnet sein können.

Jedenfalls erweist es sich als Vorteil, dass die Auswerteeinrichtung 36 auch die Signale der Schließsensoren 70 auswertet, so dass nicht nur eine Drehwinkelerfassung, sondern auch eine Erfassung einer korrekten Verriegelung der Zugkupplung 16 an der Anhängekupplung 10 durch die Auswerteeinrichtung 36 bzw. die Sensoranordnung 30 möglich ist.

Die Schließsensoren 70 umfassen einen vorzugsweise quer mittig an der Widerlagerfläche 28 angeordneten Schließsensor 70a sowie seitlich neben dem Schließsensor 70a angeordnete Schließsensoren 70b und 70c, die in Umfangsrichtung bezüglich des Kuppelkörpers 15 gesehen ein Abstand zum mittleren Schließsensor 70a haben.

Im Prinzip würde es ausreichen, wenn nur ein Schließsensor 70 vorhanden ist, so dass beispielsweise der mittlere Schließsensor 70a vorgesehen ist. Bevorzugt ist jedoch eine Redundanz, d.h. dass mehrere Schließsensoren 70 vorhanden sind, wobei mindestens zwei der Schließsensoren 70 erfassen sollen, dass das Schließteil 21 in der Schließstellung ist.

Nur wenn mindestens zwei der Schließsensoren 70 erfassen, dass das Schließteil 21 die Schließstellung einnimmt, gibt die Auswerteeinrichtung 36 ein entsprechendes Meldesignal aus, dass die Zugkupplung 16 ordnungsgemäß an dem Kuppelkörper 15 geschlossen bzw. verriegelt ist.

Wenn sämtliche der drei Schließsensoren 70 durch das Schließteil 21 verdeckt sind, bedeutet dies, dass der Anhänger 17 in direkter Längslinie hinter dem Kraftfahrzeug 12 steht, also eine längs gestreckte, geradlinige Position des Gespanns aus Kraftfahrzeug 12 und Anhängers 17 gegeben ist. Wenn nur zwei der Schließsensoren 70 das Schließteil 21 erfassen, steht der Anhänger 17 bezogen auf eine Hochachse 50, die den Kuppelkörper 15 bei Gebrauch der Anhängekupplung 10 durchsetzt, winkelig.

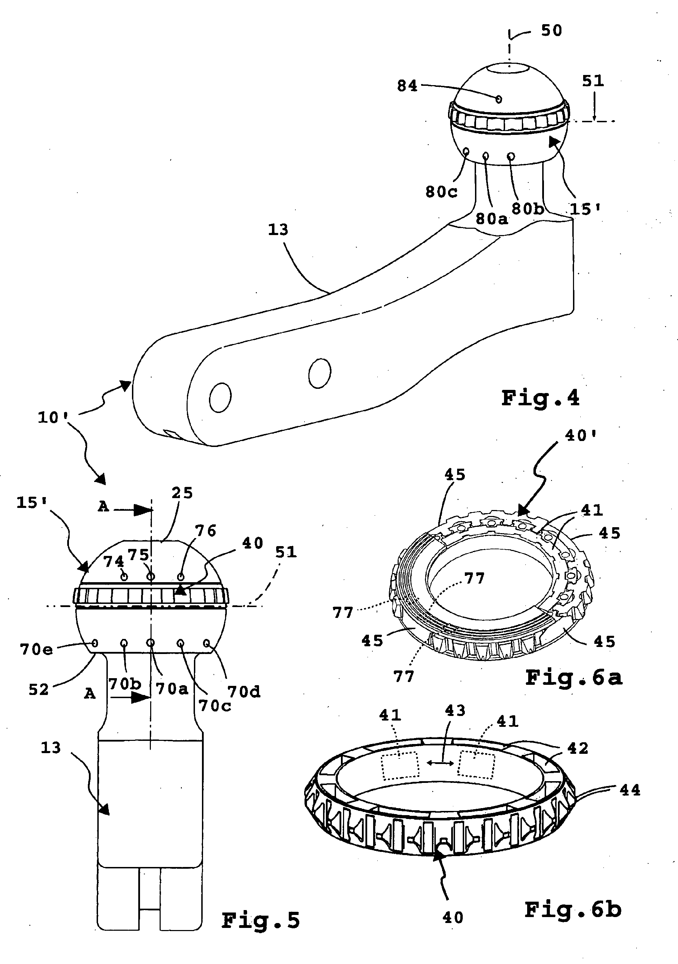

Es versteht sich, dass auch weitere Schließsensoren 70 vorgesehen sein können, beispielsweise neben den Schließsensoren 70b und 70c angeordnete Schließsensoren 70d und 70e (Figur 5). Wenn jeweils mindestens 2 der Schließsensoren 70a-70e durch das Schließteil 21 verdeckt sind bzw. dessen Nähe am Kuppelkörper 15 erfassen, liegt beispielsweise die Schließstellung der Zugkupplung 16 vor.

Eine weitere Sicherheitsmaßnahme stellt es dar, dass nicht nur die Schließsensoren 70 vorhanden sind, sondern zusätzlich noch einer oder mehrere Kupplungsaufnahme-Sensoren 80, die zur Erfassung der Zugkupplungsaufnahme 18 vorgesehen sind. Wenn also die Zugkupplungsaufnahme 18 einem oder mehreren der Kupplungsaufnahme-Sensoren 80 gegenüberliegt, beispielsweise an der Kupplungsaufnahme-Fläche 29 anliegt, melden dies die Kupplungsaufnahme-Sensoren 80 an die Auswerteeinrichtung 36, welche ihrerseits wiederum diese Sensorsignale in Verbindung mit den Sensorsignale der Schließsensoren 70 analysiert und dementsprechend Meldesignale und/oder Steuersignale an das Bordnetz 99 sendet, die signalisieren, ob die Zugkupplung 16 geschlossen ist oder offen.

Die Kupplungsaufnahme Sensoren 80 sind an -der Kupplungsaufnahme-Fläche 29 vorgesehen, beispielsweise an der zur Widerlagerfläche 28 entgegengesetzten Seite des Kuppelkörpers 15. Die Kupplungsaufnahme-Sensoren 80 sind ebenfalls zweckmäßigerweise berührungslose Sensoren, wobei auch hier Tastsensoren möglich sind. Beispielsweise umfassen die Kupplungsaufnahme-Sensoren 80 optische Sensoren, kapazitive Sensoren, induktive Sensoren oder Kombinationen davon.

Die Kupplungsaufnahme-Sensoren 80 sind in Kanälen 81 aufgenommen, die an der Kupplungsaufnahme-Fläche 29 des Kuppelkörpers 15 münden. Die Kanäle 81 sind vorzugsweise mittels Deckeln und/oder einer Vergussmasse oder dergleichen verschlossen. Die Kanäle 81 sind mit dem Kanal 39 verbunden, so dass beispielsweise elektrische Leitungen 83 zwischen den Kupplungsaufnahme-Sensoren 80 und der Auswerteeinrichtung 36 ohne weiteres montierbar sind.

An dieser Stelle sei bemerkt, dass beispielsweise auch eine drahtlose Kommunikation zwischen einer erfindungsgemäßen Sensoranordnung und einer Auswerteeinrichtung und/oder einem Bordnetz eines Zugfahrzeugs bzw. Kraftfahrzeugs ohne weiteres möglich ist. Es ist zum Beispiel möglich, dass in der Sensoraufnahme 32 direkt eine Auswerteeinrichtung platziert ist, die ihrerseits beispielsweise drahtlos, mittels elektrischer Leitungen oder dergleichen, mit dem Bordnetz 99 kommuniziert.

Eine Variante kann beispielsweise vorsehen, dass nur ein einziger Kupplungsaufnahme-Sensor 80, zum Beispiel ein Kupplungsaufnahme-Sensor 80a, vorgesehen ist. Wenn der Kupplungsaufnahme-Sensor 80a feststellt, dass die Zugkupplungsaufnahme 18 einen vordefinierten Abstand zu der Kupplungsaufnahme-Fläche 29 aufweist oder an ihr anliegt, und mindestens eine, vorzugsweise 2 der Schließsensoren 70 ebenfalls die Schließstellung des Schließteils 21 ermitteln, wertet dies die Auswerteeinrichtung 36 beispielsweise als eine korrekte Verriegelung der Zugkupplung 16 am Kuppelkörper 15.

Zweckmäßigerweise sind mehrere Kupplungsaufnahme-Sensoren 80 vorgesehen, beispielsweise wie in Figur 4 dargestellt 2 oder 3 Kupplungsaufnahme-Sensoren 80a und 80b und/oder 80c. Mehrere Kupplungsaufnahme-Sensoren 80 erlauben eine redundante Messung, ob die Zugkupplungsaufnahme 18 am Kuppelkörper 15 korrekt anliegt.

Die Kupplungsaufnahme-Sensoren 80 sind zweckmäßigerweise unterhalb einer äquatorialen Ebene 51 des Kuppelkörpers 15 angeordnet, ebenso wie die Schließsensoren 70, die ebenfalls zweckmäßigerweise dort angeordnet sind. Somit muss also die Zugkupplung 16 über die Äquatorialebene 51 hinweg auf den Kuppelkörper 15 aufgesetzt sein, diesen also auch von unten her Umgreifen, was insbesondere in Figur 1 sichtbar ist, so dass die Schließsensoren 70 bzw. die Kupplungsaufnahme-Sensoren 80 erfassen können, ob die Zugkupplung 16 die Schließstellung einnimmt.

Der mindestens eine Schließsensor 70 und/oder der mindestens eine Kupplungsaufnahme-Sensor 80 sind zweckmäßigerweise relativ weit unten, nahe beim Kuppelkörperträger 13, am Kuppelkörper 15 angeordnet. Beispielsweise befinden sich, wie in Figur 5 sichtbar, die Schließsensoren 70 in einem unteren Endbereich des Kuppelkörpers 15, oberhalb eines unteren Randes 52 des Kuppelkörpers 15.

Es versteht sich, dass beispielsweise auch oberhalb der Äquatorialebene 51 angeordnete Schließsensoren und/oder Kupplungsaufnahme-Sensoren vorgesehen sein können. Wenn in diesem Fall auch unterhalb der Äquatorialebene mindestens ein Schließsensor und/oder mindestens ein Kupplungsaufnahme-Sensor vorhanden ist, ist eine zuverlässige Erfassung der Schließstellung der Zugkupplung 16 ohne weiteres möglich. Z.B. können oberhalb der Äquatorialebene 51 eine Kupplungsaufnahme-Sensor 84 und/oder einer oder mehrere Schließsensoren 74, 75 oder 76 vorgesehen sein.

Bei der in Figur 5 dargestellten Variante der Erfindung ist der Mitnehmer 40 zweckmäßigerweise oberhalb der Äquatorialebene 51 angeordnet, so dass ein größter Außenumfang des Kuppelkörpers 15 für den Halt der Zugkupplungsaufnahme 18 zur Verfügung steht.

Bei dem in den Figuren 1-3 dargestellten Ausführungsbeispiel der Anhängekupplung 10 ist der Mitnehmer 40 in der Äquatorialebene 51 angeordnet, während er bei der Variante gemäß Figuren 4 und 5 knapp oberhalb der Äquatorialebene 51 angeordnet ist, so dass ein größter Durchmesser des Kuppelkörpers 15, der zur Verdeutlichung von Unterschieden in den Figuren 4 und 5 als Kuppelkörper 15' bezeichnet ist, zum Halten der Zugkupplung 16 zur Verfügung steht.

An dieser Stelle sei bemerkt, dass auch der Drehwinkelsensor 31 einen Schließsensor im Sinne der Erfindung bilden kann. Beispielsweise ändert sich ein Magnetfeld, das die Magnete 41 in Richtung des Drehwinkelsensors 31 ausüben, wenn der Mitnehmer 40 durch das Schließteil 21 in die Lageraufnahme 34 hinein, d.h. zum Drehwinkelsensor 31 hin, verdrängt wird. Somit kann also beispielsweise der Drehwinkelsensor 31 durch eine Messung der Intensität der Magnetfelder der Magnete 41 ermitteln, ob das Schließteil 21 seine Schließstellung einnimmt.

Auch ein dem Mitnehmer 40 gegenüberliegender Sensor 55, zum Beispiel ein magnetischer Sensor, der in einem Kanalabschnitt 56 im Innenraum des Kuppelkörpers 15 angeordnet ist, kann einen Schließsensor bilden und die Intensität des Magnetfelds der Magnete 41 abhängig davon, ob ein Druck durch das Schließteil 21 auf den Mitnehmer 40 ausgeübt wird, erfassen, um auf diesem Wege die Schließstellung S oder Offenstellung O zu ermitteln.

Es ist auch möglich, dass an einem von einer Zugkupplung mitnehmbaren Mitnehmer eine sensorische Erfassung vorgesehen ist. So kann beispielsweise ein Mitnehmer 40' gemäß Figur 6a Vertiefungen 45 haben, die zur Aufnahme des Schließteils 21 vorgesehen sind. Wenn beispielsweise am Boden der Vertiefungen 45 und/oder neben den Vertiefungen 45 Schließsensoren 77 vorgesehen sind, können diese beispielsweise erfassen, ob das Schließteil 21 in eine der Vertiefungen 45 eingreift.

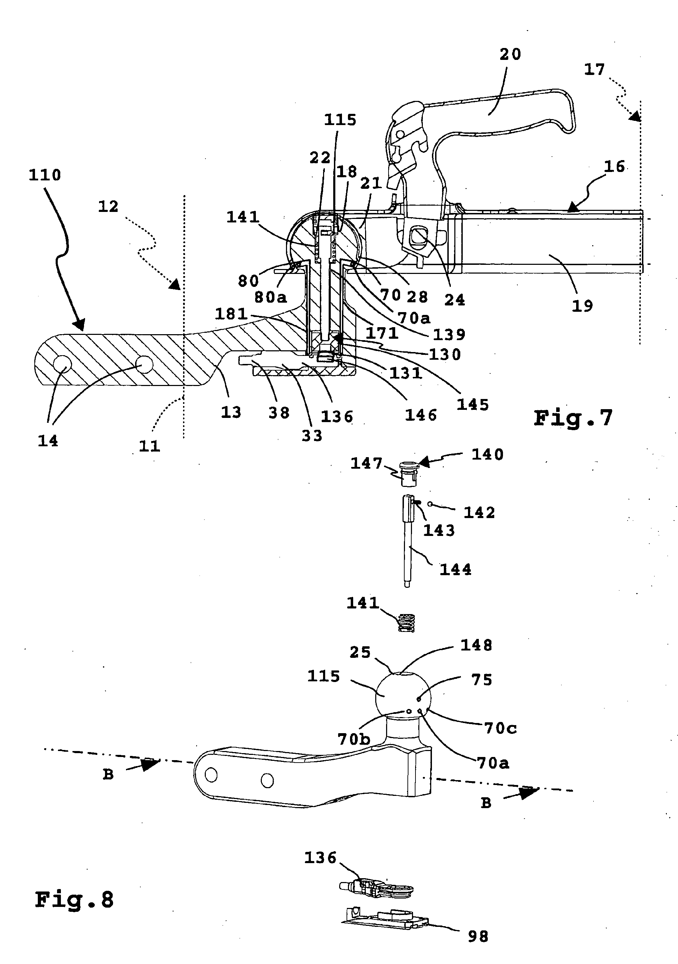

Die in den Figuren 7 und 8 dargestellte Anhängekupplung 110 weist ähnliche Komponenten wie die Anhängekupplung 10 auf, ist also insoweit mit den gleichen Bezugszeichen versehen. Ein Mitnehmer 140 der Anhängekupplung 110 steht nach oben vor die Oberseite des Kuppelkörpers 115 vor. Der Kuppelkörper 115 hat oben also eine Aufnahme 148, in die der stempelartige Mitnehmer 140 eintauchen kann. Eine Feder 141 beaufschlagt den Mitnehmer 140 nach oben. Mithilfe einer Rasteinrichtung, die unter anderem eine Kugel 142 sowie eine Feder 143 umfasst, kann der Mitnehmer 140 in einer unteren Stellung, in der er nicht vor die Kugelbeziehung dem Kuppelkörper 115 nach oben vorsteht, verrastet werden.

Der Mitnehmer 140 umfasst ein Mitnahmeteil 147, das mit dem Boden der Zugkupplungsaufnahme 18 zusammenwirkt, also von dieser reibschlüssig mitgenommen werden kann. Das Mitnahmeteil 147 ist über ein Drehachsglied 144, das einen Kanal 139 am Kuppelkörper 115 bzw. am Kuppelkörperträger 13 durchsetzt mit einem Geber 145 verbunden, der seinerseits wiederum auf einen Drehwinkelsensor 131 wirkt. Der Geber 145 umfasst beispielsweise einen oder mehrere Magneten, optische Markierungen (wenn der Drehwinkelsensor 131 ein optischer Sensor ist) oder dergleichen.

Weiterhin wirkt der Geber 145 im Sinne eines Kraft-Übertragungsglieds auf einen Kraftsensor 146, der einen Bestandteil der an der Unterseite des Kuppelkörperträgers 13 angeordneten Auswerteeinrichtung 136 bildet.

Die Sensoranordnung 130 erfasst beispielsweise auch eine Stützlast, die der Anhänger 17 auf die Anhängekupplung 110 ausübt. Wie beim vorigen Ausführungsbeispiel der Anhängekupplung 10 sind beispielsweise Schließsensoren 70 vorgesehen, die eine Schließstellung des Schließteils 21 erfassen können. Die Schließsensoren 70 sind über Leitungsverbindungen (nicht dargestellt) mit der Auswerteeinrichtung 136 verbunden. Diese Leitungen sind beispielsweise durch Kanäle 171, 181 geführt, die an der Oberfläche des Kuppelkörpers 15 münden und nach unten zur Auswerteeinrichtung 36 führen.

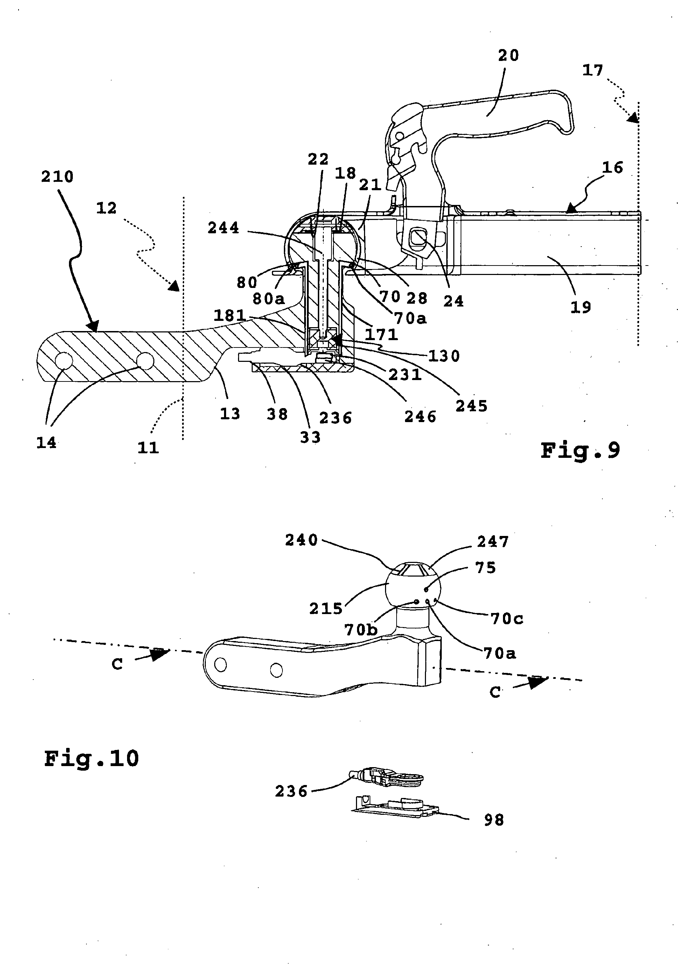

Die Anhängekupplung 210 gemäß Figuren 9 und 10 hat ähnliche Komponenten wie die Anhängekupplung 110, so dass insoweit gleiche oder ähnliche Bezugszeichen verwendet sind. Allerdings ist bei deren Mitnehmer 240 kein Mitnahmeteil in der Art eines Stempels, wie beispielsweise das Mitnahmeteil 241, sondern ein Mitnahmeteil 247 vorgesehen, das quasi als Kugelkappe des Kuppelkörpers 215 dient, der ansonsten kugelig ist. Vom Mitnahmeteil 147 führt ein Drehachsglied 244 zu einem Geber 245, der einen Drehwinkelsensor 231 und/oder eine Kraftsensor 246 betätigt.

Bei den Anhängekupplungen 110, 210 ist es vorteilhaft, wenn sie wie in den Figuren 8 und 10 angedeutet, einen oder mehrere unterhalb der Äquatorialebene 51 angeordnete Schließsensoren 70a-70c und/oder beispielsweise ein weiterer, oberhalb der Äquatorialebene 51 angeordneter Schließsensor 75 vorgesehen ist.

Eine Ausgestaltung der Erfindung kann vorsehen, dass eine Steckdose 60 vorgesehen ist, die zur Stromversorgung des Anhängers 17 dient. In die Steckdose 60 kann ein Stecker 61 des Anhängers 17 eingesteckt werden. Eine Erfassungseinrichtung 62, die beispielsweise einen Bestandteil der Auswerteeinrichtung 36 bilden kann oder mit dieser beispielsweise über elektrischer Leitungsverbindungen und/oder drahtlos zusammenwirken kann, erfasst, ob der Stecker 61 in die Steckdose 60 gesteckt ist. Wenn dies der Fall ist, sendet die Erfassungseinrichtung 62 beispielsweise ein entsprechendes Anhänger-Präsenzsignal 63 an die Auswerteeinrichtung 36, 136, 236, was für diese wiederum ein Signal ist, die Signale der Schließsensoren 70 und/oder der Kupplungsaufnahme-Sensoren 80 auszuwerten und dementsprechend ein Meldesignal über eine korrekt geschlossene oder nicht geschlossene Zugkupplung 16, beispielsweise an das Bordnetz 99, zu melden und/oder an der Ausgabeeinrichtung 37b auszugeben.

## Patentansprüche

1. Anhängekupplung für ein Kraftfahrzeug (12), insbesondere ein Personen-Kraftfahrzeug (12), zum Anhängen eines Anhängers (17) an das Kraftfahrzeug (12), mit einem an dem Kraftfahrzeug (12) befestigbaren oder befestigten Kuppelkörperträger (13) und einem an einem freien Endbereich des Kuppelkörperträgers (13) angeordneten Kuppelkörper (15; 115; 215), auf den eine Zugkupplungsaufnahme (18) einer Zugkupplung (16) des Anhängers (17) aufsetzbar ist, wobei der Kuppelkörper (15; 115; 215) mindestens eine Widerlagerfläche (28) für ein Schließteil (21) der Zugkupplung (16) aufweist, das zwischen einer zu der Widerlagerfläche (28) hin bewegten, die Zugkupplung (16) am Kuppelkörper (15; 115; 215) verriegelnden und zu einem Fahrbetrieb des Gespanns bestehend aus Kraftfahrzeug (12) und Anhänger (17) vorgesehenen Schließstellung und einer von der Widerlagerfläche (28) weg bewegten, zum Entfernen der Zugkupplung (16) von dem Kuppelkörper (15; 115; 215) vorgesehenen Offenstellung verstellbar ist, wobei die Anhängekupplung (10; 110; 210) eine Sensoranordnung (30; 130, 230) aufweist, **dadurch gekennzeichnet, dass** die Sensoranordnung (30; 130, 230) mindestens einen Schließsensor (70) zum Erkennen der Schließstellung des Schließteils (21) der Zugkupplung (16) aufweist.

2. Anhängekupplung nach Anspruch 1, **dadurch gekennzeichnet, dass** der mindestens eine Schließsensor (70) an dem Kuppelkörper (15; 115; 215) angeordnet ist oder mindestens zwei in einem Abstand am Kuppelkörper (15; 115; 215) angeordnete Schließsensoren (70) umfasst.

3. Anhängekupplung nach Anspruch 2, **dadurch gekennzeichnet, dass** die mindestens zwei beabstandeten Sensoren horizontal und/oder über einen Außenumfang des Kuppelkörpers (15; 115 ; 215) zueinander beabstandet sind.

4. Anhängekupplung nach einem der vorhergehenden Ansprüche, **dadurch gekennzeichnet, dass** der mindestens eine Schließsensor (70) mindestens einen an der Widerlagerfläche (28) des Kuppelkörpers (15; 115; 215) angeordneten Sensor, insbesondere mindestens einen Abstandssensor, umfasst.

5. Anhängekupplung nach einem der vorhergehenden Ansprüche, **dadurch gekennzeichnet, dass** der mindestens eine Schließsensor (70) einen berührungslosen Sensor, insbesondere einen optischen Sensor und/oder einen induktiven Sensor und/oder einen kapazitiven Sensor, umfasst.

6. Anhängekupplung nach einem der vorhergehenden Ansprüche, **dadurch gekennzeichnet, dass** die Sensoranordnung (30; 130, 230) Sensorsignale mindestens zweier Sensoren, von denen einer der mindestens eine Schließsensor (70) und mindestens ein weiterer Sensor ein weiterer Schließsensor (70) und/oder ein zur Erfassung einer neben dem Schließteil (21) liegenden Fläche der Zugkupplungsaufnahme (18) der Zugkupplung (16) vorgesehener Kupplungsaufnahme-Sensor (80) ist, redundant auswertet derart, dass sie nur dann eine korrekte Verriegelung der Zugkupplung (16) am Kuppelkörper (15; 115; 215) meldet und/oder ermittelt, wenn der mindestens eine Schließsensor (70) die Schließstellung des Schließteils (21) und der weitere Schließsensor (70) ebenfalls die Schließstellung der Schließteils (21) oder der weitere der Zugkupplungsaufnahme (18) zugeordnete Kupplungsaufnahme-Sensor (80) eine Anlage der Fläche der Zugkupplungsaufnahme (18) am Kuppelkörper (15; 115; 215) meldet.

7. Anhängekupplung nach einem der vorhergehenden Ansprüche, **dadurch gekennzeichnet, dass** die Sensoranordnung (30; 130, 230) mindestens einen Kupplungsaufnahme-Sensor (80) zur Erfassung einer neben oder gegenüber dem Schließteil (21) der Zugkupplung (16) liegenden Fläche der Zugkupplungsaufnahme (18) der Zugkupplung (16) aufweist.

8. Anhängekupplung nach Anspruch 7, **dadurch gekennzeichnet, dass** der mindestens eine Kupplungsaufnahme-Sensor (80) neben der für das Schließteil (21) vorgesehenen Widerlagerfläche (28) angeordnet ist.

9. Anhängekupplung nach einem der vorhergehenden Ansprüche, **dadurch gekennzeichnet, dass** die Sensoranordnung (30; 130, 230) einen Kraftsensor (146; 246) zur Erfassung einer auf die Anhängekupplung einwirkenden Kraft, insbesondere einer Stützlast, und/oder mindestens einen Drehwinkelsensor (31; 131; 231) zur Erfassung einer Drehwinkelstellung der Zugkupplung (16) relativ zum Kuppelkörperträger (13) umfasst, wobei vorteilhaft vorgesehen ist, dass der mindestens eine Drehwinkelsensor (31; 131; 231) den mindestens einen Schließsensor (70) bildet oder mit diesem zusammenwirkt.

10. Anhängekupplung nach einem der vorhergehenden Ansprüche, **dadurch gekennzeichnet, dass** an dem Kuppelkörper. (15; 115; 215) ein, insbesondere ringförmiger, Mitnehmer (40; 140; 240) beweglich gelagert ist, der von der Zugkupplungsaufnahme (18) mitnehmbar und relativ zu dem Kuppelkörper (15; 115; 215) verstellbar ist, wobei der Mitnehmer (40; 140; 240) einen Bestandteil der Sensoranordnung (30; 130, 230) bildet.

11. Anhängekupplung nach Anspruch 10, **dadurch gekennzeichnet, dass** der Mitnehmer (40; 140; 240) durch das Schließteil (21) komprimierbar ist und/oder vor eine Oberfläche des Kuppelkörpers (15; 115; 215) vorsteht.

12. Anhängekupplung nach Anspruch 10 oder 11, **dadurch gekennzeichnet, dass** der Mitnehmer (40; 140; 240) mindestens ein durch das Schließteil (21) betätigbares Sensorteil, insbesondere einen Sensorgeber (41) und/oder einen Sensor, aufweist.

13. Anhängekupplung nach einem der vorhergehenden Ansprüche, **dadurch gekennzeichnet, dass** der Kuppelkörper (15; 115; 215) zu einem drehfesten Halt der Zugkupplung (16) ausgestaltet ist, insbesondere eine polygonale Außenoberfläche aufweist, und relativ zum Kuppelkörperträger (13) drehbar gelagert ist, und/oder dass der Kuppelkörper (15; 115; 215) außenseitig zumindest abschnittsweise kugelförmig ist und für die Zugkupplungsaufnahme (18) einen diese drehbar lagernden Lagerkörper zum insbesondere mehrachsig drehgelenkigen Schwenken relativ zu dem Kuppelkörperträger (13) bildet.

14. Anhängekupplung nach einem der vorhergehenden Ansprüche, **dadurch gekennzeichnet, dass** die Sensoranordnung (30; 130, 230) zur Erzeugung eines die Schließstellung des Schließteils (21) repräsentierenden Meldesignals oder Steuersignals in Abhängigkeit von einem Anhänger-Präsenzsignal (63) ausgestaltet ist, das von einer insbesondere einen Bestandteil der Anhängekupplung (10; 110; 210) bildenden Erfassungseinrichtung (62) in Abhängigkeit von einer Verbindung einer elektrischen Anhänger-Kontaktanordnung, insbesondere eines Steckers (61), des Anhängers (17) mit einer insbesondere einen Bestandteil der Anhängekupplung (10; 110; 210) bildenden Stromversorgungseinrichtung, insbesondere einer Anhängersteckdose (60), zur elektrischen Stromversorgung des Anhängers (17) erzeugt wird.

15. Anhängekupplung nach einem der vorhergehenden Ansprüche, **dadurch gekennzeichnet, dass** sie eine Schnittstelle (38) zu einem Bordnetz des Kraftfahrzeugs (12) aufweist, und dass sie zum Senden eines Melde- und/oder Steuersignals, insbesondere eines Warnsignals oder eines Signals zur Blockierung einer Bremse des Zugfahrzeugs, in Abhängigkeit von der Schließstellung des Schließteils (21) der Zugkupplung (16) ausgestaltet ist.

## Claims

1. Trailer coupling for a motor vehicle (12), in particular a car (12), for attaching a trailer (17) to the motor vehicle (12), with a coupling body support (13) attachable or attached to the motor vehicle (12) and a coupling body (15; 115; 215) provided at a free end of the coupling body support (13) and on to which a towing coupling seating (18) of a towing coupling (16) of the trailer (17) may be fitted, wherein the coupling body (15; 115; 215) has at least one thrust bearing surface (28) for a closing part (21) of the towing coupling (16), which may be adjusted between a closed position moved towards the thrust bearing surface (28), locking the towing coupling (16) to the coupling body (15; 115; 215) and provided for operation of the combination comprised of motor vehicle (12) and trailer (17), and an open position moved away from the thrust bearing surface (28) and provided for removing the towing coupling (16) from the coupling body (15; 115; 215), wherein the trailer coupling (10; 119; 210) has a sensor array (30; 130; 230), **characterised in that** the sensor array (30; 130; 230) has at least one closing sensor (70) for detecting the closed position of the closing part (21) of the towing coupling (16).

2. Trailer coupling according to claim 1, **characterised in that** the closing sensor or sensors (70) is or are mounted on the coupling body (15; 115; 215) or comprises at least two closing sensors (70) mounted spaced apart on the coupling body (15; 115; 215).

3. Trailer coupling according to claim 2, **characterised in that** the two or more spaced-apart sensors are spaced apart horizontally over an outer periphery of the coupling body (15; 115; 215).

4. Trailer coupling according to any of the preceding claims, **characterised in that** the closing sensor or sensors (70) includes or include at least one sensor mounted on the thrust bearing surface (28) of the coupling body (15; 115; 215), in particular at least one distance sensor.

5. Trailer coupling according to any of the preceding claims, **characterised in that** the closing sensor or sensors (70) is or are a non-contact sensor or sensors, in particular an optical sensor and/or an inductive sensor and/or a capacitive sensor.

6. Trailer coupling according to any of the preceding claims, **characterised in that** the sensor array (30; 130; 230) makes a redundant evaluation of at least two sensors, of which one is the closing sensor or sensors (70) and at least one other sensor is a further closing sensor (70) and/or a coupling seating sensor (80) provided to detect a surface of the towing coupling seating (18) of the towing coupling (16) lying next to the closing part (21) in such a way that it reports and/or determines correct locking of the towing coupling (16) to the coupling body (15; 115; 215) only if the closing sensor or sensors (70) reports or report the closed position of the closing part (21) and the further closing sensor (70) similarly reports the closed position of the closing part (21) or the further coupling seating sensor (80) assigned to the towing coupling seating (18) reports contact of the towing coupling seating (18) with the coupling body (15; 115; 215).

7. Trailer coupling according to any of the preceding claims, **characterised in that** the sensor array (30; 130; 230) has at least one coupling seating sensor (80) to detect a surface of the towing coupling seating (18) of the towing coupling (16) lying next to or opposite the closing part (21) of the towing coupling (16).

8. Trailer coupling according to claim 7, **characterised in that** the coupling seating sensor or sensors (80) is or are located next to the thrust bearing surface (28) provided for the closing part (21).

9. Trailer coupling according to any of the preceding claims, **characterised in that** the sensor array (30; 130; 230) has a force sensor (146; 246) to detect a force acting on the trailer coupling, in particular a noseweight, and/or at least one rotation angle sensor (31; 131; 231) to detect a rotation angle position of the towing coupling (16) relative to the coupling body support (13), wherein advantageously it is provided that the rotation angle sensor or sensors (31; 131; 231) form the closing sensor or sensors (70) or act in conjunction with the latter.

10. Trailer coupling according to any of the preceding claims, **characterised in that** movably mounted on the coupling body (15; 115; 215) is a driver (40; 140; 240), in particular annular, which may be driven by the towing coupling seating (18) and is adjustable relative to the coupling body (15; 115; 215), wherein the driver (40; 140; 240) forms an integral part of the sensor array (30; 130; 230).

11. Trailer coupling according to claim 10, **characterised in that** the driver (40; 140; 240) may be compressed by the closing part (21) and/or protrudes beyond a surface of the coupling body (15; 115; 215).

12. Trailer coupling according to claim 10 or 11, **characterised in that** the driver (40; 140; 240) has at least one sensor part which may be actuated by the closing part (21), in particular a sensor pickup (41) and/or a sensor.

13. Trailer coupling according to any of the preceding claims, **characterised in that** the coupling body (15; 115; 215) is designed to provide a non-rotatable hold of the towing coupling (16) and in particular has a polygonal outer surface, and is mounted rotatably relative to the coupling body support (13), and/or that the coupling body (15; 115; 215) on the outside is at least in sections spherical and forms a bearing body for the towing coupling seating (18), giving rotatable support to the latter for swivel-jointed pivoting, in particular multi-axis, relative to the coupling body support (13).

14. Trailer coupling according to any of the preceding claims, **characterised in that** the sensor array (30; 130; 230) is designed to generate a status signal or control signal representing the closed position of the closing part (21) and depending on a trailer presence signal (63), which is generated by a detection device (62) in particular forming an integral part of the trailer coupling (10; 119; 210), depending on a connection of an electrical trailer contact arrangement of the trailer (17), in particular a plug connector (61), with a power supply device, in particular a trailer socket (60) and in particular forming an integral part of the trailer coupling (10; 119; 210), for the electrical power supply of the trailer (17).

15. Trailer coupling according to any of the preceding claims, **characterised in that** it has an interface (38) to a vehicle electrical system of the motor vehicle (12), and that it is designed for the transmission of a status and/or control signal, in particular a warning signal or a signal for locking a brake of the towing vehicle depending on the closed position of the closing part (21) of the towing coupling (16).

## Revendications

1. Attelage pour un véhicule automobile (12), en particulier un véhicule automobile personnel (12), pour l'attelage d'une remorque (17) au véhicule automobile (12), avec un support de corps d'attelage (13) fixé ou pouvant être fixé au véhicule automobile (12) et un corps d'attelage (15 ; 115 ; 215) agencé sur une zone d'extrémité libre du support de corps d'attelage (13), sur lequel un logement d'attelage de traction (18) d'un attelage de traction (16) de la remorque (17) peut être placé, le corps d'attelage (15 ; 115 ; 215) présentant au moins une surface de contre-palier (28) pour une partie de fermeture (21) de l'attelage de traction (16) qui peut être déplacée entre une position de fermeture déplacée vers la surface de contre-palier (28), verrouillant l'attelage de traction (16) sur le corps d'attelage (15 ; 115 ; 215) et prévue pour un mode de roulement de l'ensemble de l'attelage se composant du véhicule automobile (12) et de la remorque (17) et une position ouverte déplacée en éloignement de la surface de contre-palier (28), prévue pour le retrait de l'attelage de traction (16) du corps d'attelage (15 ; 215 ; 225), l'attelage (10 ; 110 ; 210) présentant un agencement de capteur (30; 130; 230), **caractérisé en ce que** l'agencement de capteur (30 ; 130 ; 230) présente au moins un capteur de fermeture (70) pour la détection de la position de fermeture de la partie de fermeture (21) de l'attelage de traction (16).

2. Attelage selon la revendication 1, **caractérisé en ce que** l'au moins un capteur de fermeture (70) est agencé sur le corps d'attelage (15 ; 115 ; 215) ou comporte au moins deux capteurs de fermeture (70) agencés à une distance sur le corps d'attelage (15 ; 115 ; 215).

3. Attelage selon la revendication 2, **caractérisé en ce que** les au moins deux capteurs espacés sont espacés l'un de l'autre horizontalement et/ou sur une périphérie extérieure du corps d'attelage (15 ; 115 ; 215).

4. Attelage selon l'une quelconque des revendications précédentes, **caractérisé en ce que** l'au moins un capteur de fermeture (70) comporte au moins un capteur agencé sur la surface de contre-palier (28) du corps d'attelage (15 ; 115 ; 215), en particulier au moins un capteur de distance.

5. Attelage selon l'une quelconque des revendications précédentes, **caractérisé en ce que** l'au moins un capteur de fermeture (70) comporte un capteur sans contact, en particulier un capteur optique et/ou un capteur inductif et/ou un capteur capacitif.

6. Attelage selon l'une quelconque des revendications précédentes, **caractérisé en ce que** l'agencement de capteur (30; 130; 230) évalue de manière redondante des signaux de capteur au moins de deux capteurs, dont un est l'au moins un capteur de fermeture (70) et au moins un autre capteur est un autre capteur de fermeture (70) et/ou est un capteur de logement d'attelage (80) prévu pour la détection d'une surface se trouvant près de la partie de fermeture (21) du logement d'attelage de traction (18) de l'attelage de traction (16), de telle manière qu'il signale et/ou détermine un verrouillage correct de l'attelage de traction (16) sur le corps d'attelage (15; 115; 215) seulement lorsque l'au moins un capteur de fermeture (70) signale la position de fermeture de la partie de fermeture (21) et l'autre capteur de fermeture (70) signale aussi la position de fermeture de la partie de fermeture (21) ou l'autre capteur de logement d'attelage (80) associé au logement d'attelage de traction (18) signale une installation de la surface du logement d'attelage de traction (18) contre le corps d'attelage (15 ; 115 ; 215).

7. Attelage selon l'une quelconque des revendications précédentes, **caractérisé en ce que** l'agencement de capteur (30 ; 130 ; 230) présente au moins un capteur de logement d'attelage (80) pour la détection d'une surface se trouvant à côté ou en face de la partie de fermeture (21) de l'attelage de traction (16) du logement d'attelage de traction (18) de l'attelage de traction (16).

8. Attelage selon la revendication 7, **caractérisé en ce que** l'au moins un capteur de logement d'attelage (80) est agencé à côté de la surface de contre-palier (28) prévue pour la partie de fermeture (21).

9. Attelage selon l'une quelconque des revendications précédentes, **caractérisé en ce que** l'agencement de capteur (30 ; 130 ; 230) comporte un capteur de force (146 ; 246) pour la détection d'une force agissant sur l'attelage, en particulier une charge d'appui, et/ou au moins un capteur d'angle de rotation (31 ; 131 ; 231) pour la détection d'une position d'angle de rotation de l'attelage de traction (16) par rapport au support de corps d'attelage (13), étant prévu avantageusement que l'au moins un capteur d'angle de rotation (31 ; 131 ; 231) forme l'au moins un capteur de fermeture (70) ou coagisse avec celui-ci.

10. Attelage selon l'une quelconque des revendications précédentes, **caractérisé en ce qu'**un entraîneur (40 ; 140 ; 240), en particulier annulaire, est logé de manière mobile sur le corps d'attelage (15; 115; 215), lequel est entraînable par le logement d'attelage de traction (18) et déplaçable par rapport au corps d'attelage (15 ; 115 ; 215), l'entraîneur (40 ; 140 ; 240) formant un élément de l'agencement de capteur (30 ; 130 ; 230).

11. Attelage selon la revendication 10, **caractérisé en ce que** l'entraîneur (40; 140; 240) peut être comprimé par la partie de fermeture (21) et/ou dépasse d'une surface du corps d'attelage (15 ; 115 ; 215).

12. Attelage selon la revendication 10 ou 11, **caractérisé en ce que** l'entraîneur (40 ; 140 ; 240) présente au moins une partie de capteur actionnable par la partie de fermeture (21), en particulier un émetteur de détection (41) et/ou un capteur.

13. Attelage selon l'une quelconque des revendications précédentes, **caractérisé en ce que** le corps d'attelage (15 ; 115 ; 215) est configuré pour un maintien résistant à la rotation de l'attelage de traction (16), présente en particulier une surface extérieure polygonale, et est logé de manière rotative par rapport au support de corps d'attelage (13), et/ou **en ce que** le corps d'attelage (15 ; 115 ; 215) présente au moins par sections une forme de boule côté extérieur et forme pour le logement d'attelage de traction (18) un corps de palier logeant celui-ci de manière rotative pour le pivotement en particulier par charnière à plusieurs axes par rapport au support de corps d'attelage (13).

14. Attelage selon l'une quelconque des revendications précédentes, **caractérisé en ce que** l'agencement de capteur (30 ; 130 ; 230) est configuré pour la génération d'un signal d'avertissement ou signal de commande représentant la position de fermeture de la partie de fermeture (21) en fonction d'un signal de présence de remorque (63) qui est généré par un dispositif de détection (62) formant en particulier un élément de l'attelage (10 ; 110 ; 210) en fonction d'une liaison d'un agencement de contact de remorque électrique, en particulier d'une fiche (61), de la remorque (17) avec un dispositif d'alimentation électrique formant en particulier un élément de l'attelage (10 ; 110 ; 210), en particulier d'une prise de remorque (60) pour l'alimentation en courant électrique de la remorque (17).

15. Attelage selon l'une quelconque des revendications précédentes, **caractérisé en ce qu'**il présente une interface (38) avec un réseau de bord du véhicule automobile (12), et **en ce qu'**il est configuré pour l'émission d'un signal d'avertissement et/ou de commande, en particulier d'un signal d'alerte ou d'un signal de blocage d'un frein du véhicule tracteur en fonction de la position de fermeture de la partie de fermeture (21) de l'attelage de traction (16).
